# FASCICULE DE BREVET EUROPEEN

(11) **EP 4 284 683 B1**
(45) Date de publication et mention de la délivrance du brevet: **27.08.2025**
(21) Numéro de dépôt: 21851826.4
(22) Date de dépôt: 14.12.2021
(51) Int. Cl.: B60R 19/12, B62D 25/08

(54) **STRUCTURE AVANT DE VÉHICULE AUTOMOBILE COMPORTANT UNE TRAVERSE SUPÉRIEURE ET VÉHICULE COMPORTANT UNE TELLE STRUCTURE AVANT**
FRONTSTRUKTUR EINES KRAFTFAHRZEUGS MIT EINEM OBEREN QUERTRÄGER UND FAHRZEUG MIT EINER SOLCHEN FRONTSTRUKTUR
FRONT STRUCTURE OF A MOTOR VEHICLE WITH AN UPPER CROSSBAR AND VEHICLE WITH SUCH A FRONT STRUCTURE

(30) Priorité: 28.01.2021 FR 2100827
(43) Date de publication de la demande: 06.12.2023
(73) Titulaire: Stellantis Auto SAS, 78300 Poissy (FR)
(72) Inventeur: PERON, Rodolphe, 95220 HERBLAY (FR); GOURVENNEC, Thibault, 91210 DRAVEIL (FR); MICHEL, Xavier, 77340 PONTAULT COMBAULT (FR); ROYER, Guillaume, 91680 BRUYERES LE CHATEL (FR)
(74) Mandataire: BCIP
(86) Numéro de dépôt international: PCT/FR2021/052324
(87) Numéro de publication internationale: WO 2022/162287

(56) Documents cités:
- EP-A1- 2 949 518
- EP-A2- 1 266 818
- EP-B1- 2 949 518
- WO-A1-2020/008123

## Description

L'invention se rapporte au domaine des véhicules automobiles, et concerne plus particulièrement le comportement en déformation de la structure des véhicules automobiles en cas de choc frontal à faible recouvrement. Les chocs frontaux à faible recouvrement, c'est-à-dire avec un recouvrement entre un obstacle fixe et la façade avant d'un véhicule automobile inférieur à 25%, prennent une place de plus en plus importante dans le cadre des protocoles d'essais effectués au sein d'agences gouvernementales ou non gouvernementales. Ces essais ont pour but de vérifier le respect des normes en vigueur dans chaque pays, notamment en ce qui concerne les répercussions des chocs sur les véhicules et leurs occupants.

Afin que la structure d'un véhicule puisse se déformer avec la meilleure efficacité possible lors d'un choc frontal à faible recouvrement, la structure avant d'un véhicule automobile comporte généralement deux poutres structurelles longitudinales, couramment appelées « brancards », et prolongées à l'avant par deux caissons déformables en cas de choc, couramment appelés « crashboxes ». Entre chaque brancard et chaque caisson déformable se trouve généralement un élément dénommé appui de façade. Il est également connu de prévoir une traverse supérieure reliant les appuis de façade, et permettant ainsi de rigidifier la structure avant du véhicule, évitant ainsi la déformation des brancards lors d'un choc frontal à faible recouvrement. Le document EP1266818A montre une structure avant de véhicule automobile selon le préambule de la revendication 1.

L'invention a pour but de proposer une structure avant de véhicule automobile, comportant une traverse supérieure améliorée.

À cet effet, l'invention concerne une structure avant de véhicule automobile avec les caractéristiques de la revendication 1, comportant :
- deux poutres structurelles longitudinales, de forme globalement allongée selon une direction parallèle à l'axe longitudinal du véhicule ;
- deux caissons de déformation, chaque caisson de déformation étant solidaire respectivement d'une des poutres structurelles longitudinales ;
- une traverse supérieure, la traverse supérieure comportant un élément de traverse allongé selon un axe transversal du véhicule, l'élément de traverse étant fixé au reste de la structure avant par l'intermédiaire de deux supports de fixation, chaque support de fixation étant pris en sandwich respectivement entre la poutre structurelle longitudinale et le caisson de déformation correspondants.

Ainsi, en prévoyant une traverse supérieure dont les supports de fixation sont pris en sandwich entre les extrémités avant des poutres structurelles longitudinales (ou brancards avant) et les caissons de déformation, la traverse supérieure peut être très facilement intégrée à une structure existante, par exemple pour adapter celle-ci aux contraintes de pays où la tenue à un choc frontal avec faible recouvrement est requise pour l'homologation. En effet, aucune modification des différents éléments servant à la fixation des caisson de déformation n'est requise. Il est donc possible de prévoir une traverse supérieure sur une structure avant sans nécessiter de modifications importantes des pièces préexistantes.

Chaque poutre structurelle longitudinale est solidaire, à une extrémité avant, d'un élément de support, chaque support de fixation étant pris en sandwich respectivement entre l'élément de support et le caisson de déformation correspondants.

Chaque support de fixation de la traverse supérieure comporte des ouvertures traversantes, les ouvertures permettant le passage d'éléments de fixation, tels que des vis, pour la fixation du caisson de déformation correspondant sur l'élément de support correspondant.

Chaque support de fixation est réalisé par assemblage de deux demi-coques, entre lesquelles sont interposés des éléments tubulaires pour le passage des éléments de fixation des caissons de déformation, les éléments tubulaires étant en regard des ouvertures.

Dans une réalisation, un élément anti-écrasement est interposé entre les deux demi-coques, par exemple un élément métallique de forme tubulaire.

Dans une réalisation, l'élément de traverse est solidarisé à chacun des supports de fixation par soudage.

Dans une réalisation, un élément de renfort, tel qu'une plaque de renfort, est prévu au niveau de la jonction entre chaque support de fixation et l'élément de traverse.

Dans une réalisation, la structure avant comporte une poutre transversale solidaire de chacun des caissons de déformation.

L'invention concerne également un véhicule automobile comportant une structure avant conforme à celle définie ci-dessus.

La présente invention sera mieux comprise à la lecture de la description détaillée qui suit, faite en référence aux dessins annexés, dans lesquels :
[Fig. 1] La figure 1 est une vue partielle en perspective d'une structure avant de véhicule automobile, le véhicule comportant une traverse supérieure conforme à l'invention.
[Fig. 2] La figure 2 est une vue en perspective d'une traverse supérieure conforme à l'invention.
[Fig. 3] La figure 3 est une vue de détail de la figure 2.
[Fig. 4] La figure 4 est une vue en perspective d'un support de fixation de la traverse supérieure de la figure 2.
[Fig. 5] La figure 5 est une vue éclatée du support de fixation de la figure 4.

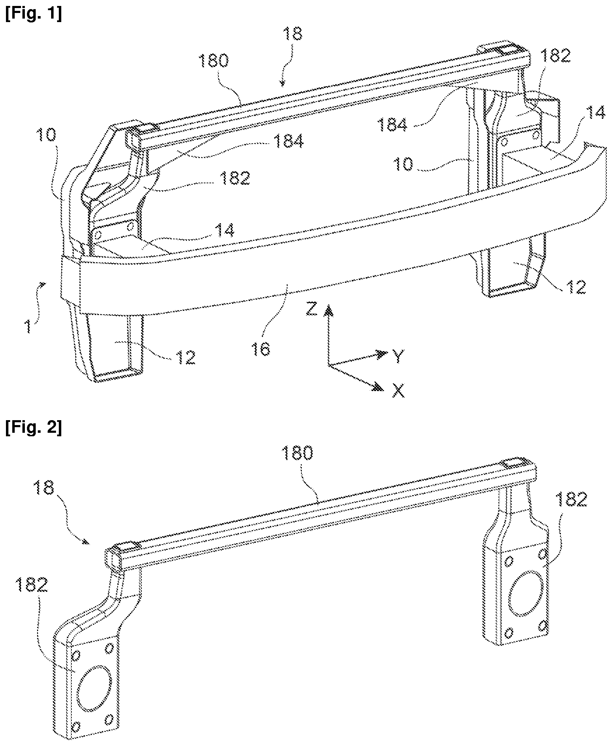

La figure 1 est une vue partielle en perspective d'une structure avant 1 de véhicule automobile conforme à l'invention. La structure avant 1 du véhicule comporte deux poutres structurelles longitudinales, ou brancards 10 avant. Seules les extrémités avant des brancards 10 sont visibles sur la figure 1. Les brancards 10 s'étendent globalement selon une direction parallèle à l'axe longitudinal X du véhicule automobile, encadrant ainsi un certain nombres d'éléments du véhicule, dont le groupe motopropulseur (non représenté).

À l'extrémité avant de chaque brancard 10 est fixé un élément de support 12, ou appui de façade 12, servant notamment à la fixation d'un caisson de déformation 14 respectif (ou « crashbox »), apte à se déformer en cas de choc, et plus particulièrement en cas de choc frontal. Les caissons de déformation 14 sont reliés entre eux par une poutre transversale 16, couramment dénommée poutre de pare-chocs.

Conformément à l'invention, la structure avant 1 comporte en outre une traverse supérieure 18, visible notamment sur les figures 1 et 2. La traverse supérieure 18 est fixée rigidement à chacun des appuis de façade 12. Plus précisément, la traverse supérieure 18 comporte un élément de traverse 180, allongé selon une direction parallèle à l'axe transversal Y du véhicule, et relié à chaque appui de façade 12 par l'intermédiaire d'un support de fixation 182 respectif. Chaque support de fixation 182 est pris en sandwich entre l'appui de façade 12 et le caisson de déformation 14 correspondants.

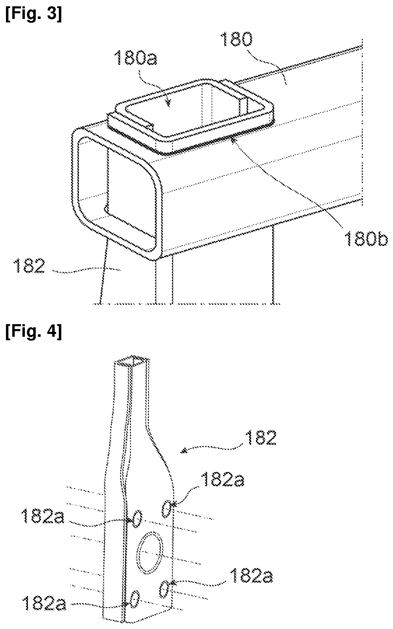

Avantageusement, la traverse supérieure 18 est réalisé par assemblage d'éléments métalliques, notamment par soudage. Par exemple, comme visible sur la figure 3, chaque support de fixation 182 de la traverse supérieure 18 comporte une extrémité supérieure qui est insérée dans une ouverture 180a traversante prévue dans l'élément de traverse 180. Chaque support de fixation 182 peut ainsi être fixé à l'élément de traverse 180 au moyen d'un premier cordon de soudure 180b, disposé au niveau d'une surface supérieure de l'élément de traverse 180, et d'un deuxième cordon de soudure (non visible sur les figures), disposé au niveau d'une surface inférieure de l'élément de traverse 180. Avantageusement, comme visible sur la figure 1, un élément de renfort 184, tel qu'une plaque de renfort, peut être prévu au niveau de la fixation de chaque pied de fixation 182 à l'élément de traverse 180.

Avantageusement, comme visible sur la figure 4, afin de réaliser la fixation de chaque support de fixation 182 de la traverse supérieure 18, chaque support de fixation 182 comporte des ouvertures 182a traversantes, permettant le passage des différents éléments de fixations (tels que des vis, des tiges filetées, etc.) servant à la fixation de la poutre transversale 16 et de chaque caisson de déformation 14 sur l'appui de façade 12 correspondant.

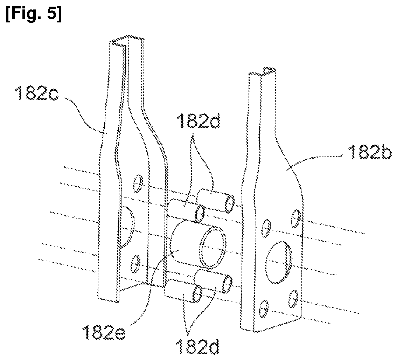

Avantageusement, comme visible sur la figure 5, chaque support de fixation 182 est réalisé par un assemblage d'éléments métalliques, notamment par soudage. Dans l'exemple de la figure 5, chaque support de fixation est réalisé par l'assemblage de deux demi-coques 182b, 182c, entre lesquelles sont interposés des éléments tubulaires 182d pour le passage des éléments de fixation de la poutre transversale 16 et des caissons de déformation 14. Ainsi, les éléments tubulaires 182d sont disposés en regard des ouvertures 182a. Avantageusement, un élément anti-écrasement 182e est également interposé entre les deux demi-coques 182b, 182c, tel qu'un élément métallique de forme tubulaire. L'élément anti-écrasement 182e permet d'empêcher ou au moins de limiter drastiquement l'écrasement du support de fixation 182 en cas de choc frontal.

La traverse supérieure 18 permet d'optimiser la déformation de la structure avant conforme à l'invention en cas de choc frontal à faible recouvrement, en améliorant la rigidité latérale de l'ensemble de la structure avant 1. Ainsi, en cas de choc frontal à faible recouvrement contre un obstacle, la traverse supérieure 18 permet d'éviter un trop grand déséquilibre entre les éléments situés du côté de l'obstacle et ceux situés du côté opposé. En particulier, la traverse supérieure 18 permet de faire en sorte que les deux caissons de déformation 14 se déforment lors du choc, et pas seulement le caisson de déformation 14 situé du côté de l'obstacle. On comprend donc que le comportement de la structure avant 1 lors d'un choc frontal, notamment un choc frontal à faible recouvrement, s'en trouve amélioré, ainsi que la sécurité des occupants du véhicule.

## Revendications

1. Structure avant (1) de véhicule automobile, comportant :
- deux poutres structurelles longitudinales (10), de forme globalement allongée selon une direction parallèle à l'axe longitudinal (X) du véhicule ;
- deux caissons de déformation (14), chaque caisson de déformation (14) étant solidaire respectivement d'une des poutres structurelles longitudinales (10) ; et
- une traverse supérieure (18), la traverse supérieure (18) comportant un élément de traverse (180) allongé selon un axe transversal (Y) du véhicule, l'élément de traverse (180) étant fixé au reste de la structure avant (1) par l'intermédiaire de deux supports de fixation (182), chaque support de fixation (182) étant pris en sandwich respectivement entre la poutre structurelle longitudinale (10) et le caisson de déformation (14) correspondants,
chaque poutre structurelle longitudinale (10) étant solidaire, à une extrémité avant, d'un élément de support (12), chaque support de fixation (182) étant pris en sandwich respectivement entre l'élément de support (12) et le caisson de déformation (14) correspondants, chaque support de fixation (182) de la traverse supérieure (18) comportant des ouvertures (182a) traversantes, les ouvertures (182a) permettant le passage d'éléments de fixation, tels que des vis, pour la fixation du caisson de déformation (14) correspondant sur l'élément de support (12) correspondant, **caractérisé en ce que** chaque support de fixation (182) est réalisé par assemblage de deux demi-coques (182b, 182c), entre lesquelles sont interposés des éléments tubulaires (182d) pour le passage des éléments de fixation des caissons de déformation (14), les éléments tubulaires (182d) étant en regard des ouvertures 182a.

2. Structure avant (1) selon la revendication précédente, dans laquelle un élément anti-écrasement (182e) est interposé entre les deux demi-coques (182b, 182c), par exemple un élément métallique de forme tubulaire.

3. Structure avant (1) selon l'une des revendications précédentes, dans laquelle l'élément de traverse (180) est solidarisé à chacun des supports de fixation (182) par soudage.

4. Structure avant (1) selon la revendication précédente, dans laquelle un élément de renfort (184), tel qu'une plaque de renfort, est prévu au niveau de la jonction entre chaque support de fixation (182) et l'élément de traverse (180).

5. Structure avant (1) selon l'une des revendications précédentes, comportant une poutre transversale (16) solidaire de chacun des caissons de déformation (14).

6. Véhicule automobile comportant une structure avant (1) conforme à l'une des revendications précédentes.

## Patentansprüche

1. Frontstruktur (1) eines Kraftfahrzeugs, bestehend aus:
- zwei längliche strukturelle Träger (10), die in einer Richtung parallel zur Längsachse (X) des Fahrzeugs im Allgemeinen länglich sind;
- zwei Verformungskästen (14), wobei jeder Verformungskasten (14) jeweils mit einem der Längsstrukturträger (10) verbunden ist, und
- eine obere Traverse (18), wobei die obere Traverse (18) ein Traversenelement (180) aufweist, das entlang einer Querachse (Y) des Fahrzeugs langgestreckt ist, wobei das Traversenelement (180) über zwei Befestigungsstützen (182) am Rest der vorderen Struktur (1) befestigt ist, wobei jeder Befestigungsträger (182) zwischen dem länglichen Strukturbalken (10) und dem entsprechenden Verformungskasten (14) sandwichartig eingeschlossen ist,
Da jeder längsverlaufende Strukturbalken (10) an einem vorderen Ende mit einem Trägerelement (12) fest verbunden ist, wobei jeder Befestigungsträger (182) zwischen dem Trägerelement (12) und dem entsprechenden Verformungskasten (14) sandwichartig angeordnet ist, jeder Befestigungsträger (182) des oberen Querträgers (18) durchgehende Öffnungen (182a) aufweist, wobei die Öffnungen (182a) den Durchtritt von Befestigungselementen, wie Schrauben, zur Befestigung des entsprechenden Verformungskastens (14) an ermöglichen Das entsprechende Trägerelement (12), **dadurch gekennzeichnet, dass** jeder Befestigungsträger (182) durch Zusammenfügen von zwei Halbschalen (182b, 182c) hergestellt ist, zwischen denen rohrförmige Elemente (182d) für den Durchgang der Befestigungselemente der Verformungskästen (14) angeordnet sind, wobei die rohrförmigen Elemente (182d) den Öffnungen 182a gegenüberliegen.

2. Frontstruktur (1) nach dem vorhergehenden Anspruch, bei der ein Antiquetschelement (182e) zwischen den beiden Halbschalen (182b, 182c), z.B. ein rohrförmiges Metallelement, angeordnet ist.

3. Vorderbau (1) nach einem der vorhergehenden Ansprüche, bei dem das Querelement (180) durch Schweißen mit jedem der Befestigungsträger (182) fest verbunden ist.

4. Vorderbau (1) nach dem vorhergehenden Anspruch, bei dem ein Verstärkungselement (184), wie eine Verstärkungsplatte, an der Verbindungsstelle zwischen jedem Befestigungsträger (182) und dem Querelement (180) vorgesehen ist.

5. Vorderbau (1) nach einem der vorhergehenden Ansprüche, mit einem Querträger (16), der mit jedem der Verformungskästen (14) fest verbunden ist.

6. Kraftfahrzeug mit einer Frontstruktur (1) nach einem der vorhergehenden Ansprüche.

## Claims

1. Front structure (1) of a motor vehicle, comprising:
- two longitudinal structural beams (10), of overall elongated shape along a management parallel to the longitudinal axis (X) of the vehicle;
- two deformation boxes (14), each deformation box (14) being respectively integral with one of the longitudinal structural beams (10); and
an upper cross-member (18), the upper cross-member (18) comprising a cross-member item (180) elongated along a transverse axis (Y) of the vehicle, the cross-member item (180) being fixed to the remainder of the front frame (1) by means of two fixing supports (182), each fixing support (182) being sandwiched respectively between the corresponding longitudinal structural beam (10) and the deformation box (14),
each longitudinal structural beam (10) being integral, at a front end, with a support item (12), each fixing support (182) being sandwiched respectively between the corresponding support item (12) and the deformation box (14), each fixing support (182) of the upper cross-member (18) comprising through openings (182a), the openings (182a) allowing the passage of fixing elements, such as screws, for fixing the corresponding deformation box (14) on top of each other the corresponding support item (12), wherein each fastening support (182) is realised by assembling two half-shells (182b, 182c), between which are interposed tubular items (182d) for the passage of the fastening elements of the deformation boxes (14), the tubular items (182d) facing the openings 182a.

2. Front structure (1) according to the previous claim, in which an anti-crushing item (182e) is interposed between the two half-shells (182b, 182c), for example a metal item of tubular shape.

3. Front structure (1) according to one of the previous claims, in which the crosspiece item (180) is secured to each of the fixing supports (182) by welding.

4. Front structure (1) according to the previous claim, in which a reinforcing item (184), such as a reinforcing plate, is provided at the level of the junction between each fixing support (182) and the crosspiece item (180).

5. Front structure (1) according to one of the previous claims, comprising a transverse beam (16) integral with each of the deformation boxes (14).

6. Motor vehicle comprising a front structure (1) according to one of the previous claims.
